# EUROPEAN PATENT SPECIFICATION

(11) **EP 3 215 363 B1**
(45) Date of publication and mention of the grant of the patent: **10.06.2020**
(21) Application number: 15820601.1
(22) Date of filing: 04.11.2015
(51) Int. Cl.: B32B 7/05, B32B 27/08, B32B 27/36, B32B 37/15, B32B 38/14, B32B 38/00

(54) **MANUFACTURING PROCESS OF A COMPOSITE FILM FOR THERMOFORMED PRODUCT AND THUS OBTAINED COMPOSITE FILM.**
HERSTELLUNGSVERFAHREN EINES VERBUNDFILM FÜR THERMOFORMPRODUKT UND DAMIT HERGESTELLTES VERBUNDFILM.
PROCÉDÉ DE FABRICATION POUR FILM COMPOSITE POUR PRODUIT THERMOFORMÉ ET FILM COMPOSITE AINSI OBTENU.

(30) Priority: 04.11.2014 IT MI20141884
(43) Date of publication of application: 13.09.2017
(73) Proprietor: B4H SA, 6982 Agno (CH); Roboplast S.r.L., 12010 Vignolo CN (IT)
(72) Inventor: BRAGHINI, Daniele Alessio, 6900 Lugano (CH)
(74) Representative: Vatti, Francesco Paolo
(86) International application number: PCT/IB2015/058526
(87) International publication number: WO 2016/071851

(56) References cited:
- EP-A1- 1 036 739
- US-A1- 2004 144 482
- US-A1- 2007 264 512

## Description

### Field of the Invention

The present invention relates to a manufacturing process of a glue-LESS multi-layer decorated film and to a thermoformed product, such as a tray or a plateau, obtained from said multi-layer plastic film.

### Background Art

As known, there are fields in which it is necessary to have packages and/or supports of plastic material with a finely decorated appearance, in particular with a metallic mirror appearance. A particularly relevant sector, in addition to the cosmetic one, is the food one.

In the cases in which the plastic support has a limited duration of use (for example, packages of chocolates), the metallic finish may be applied on the surface (originating the so-called scratchable surfaces) without special disadvantages and to the benefit of economics and manufacturing speed. Vice versa, in the cases in which the support has a more significant duration of use (for example, plates and trays for food) or undergoes a more aggressive use (for example, washing up and reuse) or there are specific hygiene requirements, the decoration/metallic finish must be embedded within a multi-layer structure, so as to avoid the exhibition or the outward migration thereof.

The supports of plastic material with integrated decoration/metallic finish - which are the specific object of the present application - are manufactured by the coupling of two distinct plastic films, one of which provided with a decoration/metallic finish layer on the inner surface thereof and the other one being clear or, if needed, coloured; this construction is required because the decoration/metallic finish process cannot technically occur in line but, on the contrary, to obtain a good quality result, is performed with suitable techniques known per se (for example under vacuum deposition of metal vapours), in a discontinuous cycle.

In this respect, US3749629 discloses an in-line process which provides the deposition of the decorating material during the forming process of the multilayer film, using a layer of glue for the adhesion of strands of decorating material. The resulting product has a quality unsuitable for the applications which the present application deals with.

Historically, the coupling of the two layers of plastic film has been initially proposed by gluing. This technique, still in use, however, implies some disadvantages, especially in terms of brightness which is partly impaired by the presence of the glue between the metallic finish layer and the plastic material film it is coupled with; another limit of this technology is represented by the risk of outward migration of the adhesive components, in particular of the solvents thereof.

Subsequently it has been proposed to couple two films by the cooperation with an extrusion process.

Above-cited US 3749629 represents an example thereof. As seen, this process provides a deposition of a liquid adhesive to embed the particles of decorative material, which adhesive remains partly available (in view of the low surface covering) to ensure also the adhesion of the substrate film with the subsequent extruded film; in substance, the adhesive actively intervenes both as adhesion of the decorative particles, and as catalyst in the joining between the two plastic films which, in actual fact, do not come in direct contact one with the other. This process has the object of solving the extrusion problems of the decorative particles, not soluble in the plastic magma, which would otherwise clog the extruder mouth.

The aesthetic appearance of this product, as stated, does not allow to provide a thin film with an even metallic finish appearance and of a high quality as it is aimed in the context of this application.

Moreover, it must be considered that composite films obtained by the interposition of glues/adhesives, do not give fully satisfactory results, both in aesthetic terms, and in terms of food compliance.

More recently it has been proposed to obtain a sandwich of metallic finish film with clear film, by lamination between a metallic finish plastic substrate and an extruded.

Such process is described in EP578904. The process there disclosed provides to start from a substrate of metallic finish plastic material, in the form of bi-oriented, PET or polypropylene plastic film, then laminated together with a layer of extruded plastic material, in the still viscous state, typically clear PET.

The use of bi-oriented plastic film, for the metallic finish substrate, is considered a straight forward choice. As a matter of fact, the bi-oriented film, that is a film stretched beyond the yield point, proves advantageous for a series of reasons, linked to the mechanical properties thereof, to transparency, ability to adhere and thinness, with resulting ease of coupling and, in the last analysis, significant inexpensiveness (the weight by surface unit may be greatly reduced through the stretching process and effectiveness of the material is hence very high).

As a matter of fact, the yield undergone by the bi-oriented film, together with the thinness thereof, deprives it of mechanical resistance to the point of making it perfect for the coupling to extrusion, upon the sole passing between two simple cylinders.

However, the Applicant has detected that this type of bi-oriented material, that is metallic finish PET or polypropylene - apparently stable and inert during coupling with the clear amorphous PET extruded material - has instead some significant problems if it must subsequently undergo thermoforming for the production of items of use.

By this technology (thermoforming of bi-oriented/amorphous film) the resulting product is impaired by the conflict arising during thermomoulding between the bi-oriented layer and the amorphous one, due to the poor resiliency and to the thermal memory of the bi-oriented layer.

As a matter of fact, bi-oriented materials undergo a mechanical process which affects the behaviour thereof in time. In particular, during the stretching process, the plastic film undergoes a longitudinal stretching (through heated cylinders) and then a crosswise stretching (passing in an oven), according to an 90° angle to the machine direction; the stretching rate is in general 3 to 4 times in both directions, causing a remarkable loss of elasticity with the result of making the material harder, thinner, but limited in the ability thereof of undergoing deformations. However, once the stretched film is heated up again, shrinking phenomena arise, due to the effect of the "memory" thereof, which tends to bring the molecules to the initial state thereof.

Thereby, following hot moulding by thermoforming, during the cooling step, the elastic "memory" of the metallic finish film causes tensioning to the amorphous (inert) PET layer it is anchored to; as a result, the product thus manufactured looses planarity, because it tends to roll/sag curving along the two axes (the same along which the elongation and stretching described in the previous paragraph occur); the wider the surface (such as in a serving tray), the greater the tension and the resulting loss of planarity (curling phenomenon); this defect heightens with time and is irreversible. In order to counter the deformation of the product it is hence inevitably necessary to remarkably increase the thickness of the amorphous layer, with resulting increase of the cost of the product, waste of raw material and greater tasks for the recycling chain. In this last respect, the problem becomes even more acute in the amorphous PET variant with bi-oriented PP because the resulting composite material, in addition to everything, is not even "mono-material".

Moreover, the poor stretchability of the already-stretched, metallic-finish (bi-oriented) film limits resiliency also of the amorphous layer it is gripped to, opposing to the natural elongation thereof during thermoforming; therefrom derives the fact that this type of composite film is unable to faithfully reproduce the details of a complex mould, even arriving to delaminate or cracking itself in correspondence of the most extreme stretching, such as in the right angles at the bottom of the thermoformed product. This last problem is particularly heightened in the cases in which it is necessary to manufacture serving trays, which must be shaped with a pleasant and original appearance, but which require to create imprints with deep partitions defined in detail, hence with highly pronounced bending angles. With the bi-oriented/amorphous material, shapes must therefore be little detailed, with highly steeped walls, while the smooth planes (such as the bottoms of the trays) take up a lenticular bending with resulting poor aesthetic appearance and loss of stability of the product resting thereon.

Other coupling techniques between plastic films are furthermore known as well as products deriving from the thermoforming of multilayer films, but none thereof provides a result of interest for the application considered here.

For example, US2004/0144484 discloses a complex process for obtaining a thin layer of a fluoropolymer film. The process provides to co-extrude - with low inter-layer bond strength - a fluoropolymer film to a support layer, and then causing a receiver sheet and subsequently to mechanically delaminate the support layer to leave a very thin fluoropolymer base layer in the receiver sheet. US2007/0264512 discloses an extrusion coating process to obtain improved adhesion of polymers to metal or metalised substrates. Both these processes provide a product unsuitable per se to obtain final thermoforming.

EP1036739 discloses a product obtained by thermoforming from two mutually coupled films. One of the two films has a surface decoration and is also printed with special inks, which guarantees a physical separation between the two films. As a matter of fact, in this case, it is required that the two films do not mutually bond, because the thermoformed product then undergoes inflation, in order to separate the two films in the central area and to form between the same a volume which acts as container.

### SUMMARY OF THE INVENTION

The object of the present invention is hence that of providing a manufacturing process of a composite plastic film, containing decorations also in the form of mirror metallic finishes, which has an optimal behaviour during thermoforming, at least devoid of structural and dimensional stability problems.

Such object is achieved through a process and relative thermoformed product as described in their essential features in the attached main claims.

Other inventive aspects of the process are disclosed in the dependent claims.

### BRIEF DESCRIPTION OF THE DRAWING

Further features and advantages of the invention will in any case be more evident from the following detailed description of a preferred embodiment, given purely as a non-limiting example and illustrated in the attached drawings, wherein
Fig. 1 represents a schematic elevation side view of a plant for the process according to the invention; and
Fig. 2 is a schematic cross section view, enlarged in an exaggerated manner, of a film according to the invention.

### DETAILED DESCRIPTION OF THE PREFERRED EMBODIMENTS

For ease of explanation, in the following the manufacturing process of a composite film and a relative thermoformed tray is described, or other wide-surface support, of metalized plastic material. It is understood that from the process of the invention different decorated products can also be obtained.

In an initial step, a first film of clear, coloured or colourless plastic material must be produced, with amorphous structure, for example PET, obtained by extrusion. This first step may occur according to methodologies known per se, without practicing the conventional stretching and elongation process which would otherwise produce an orientation of the macromolecules of the plastic material. The film must be cooled and stored for the time necessary to stabilise the amorphous structure thereof.

The thickness of the first film of amorphous plastic material is normally in the order of 150-250µm but, in case it is necessary to obtain high final thicknesses, this range of thicknesses may be extended up to 800µm

This first film undergoes a decoration process, in particular metallic finishing, on one side thereof. The metallic finishing process is known per se and occurs, for example, through deposition processes of metallic vapours, such as particles of aluminum, copper, alloys of copper, zinc, silver, gold or other, accomplishing an optic density or absorbance suitable to the desired reflectance, lower than 3 and, normally ranging between 1.2 e 2.00.

Once the metal finish has been stabilised, the film is wound on a bobbin - with the side on which the decoration/metal finish is applied facing inwards - and transferred onto a reel support spindle from which it can be unwound at will.

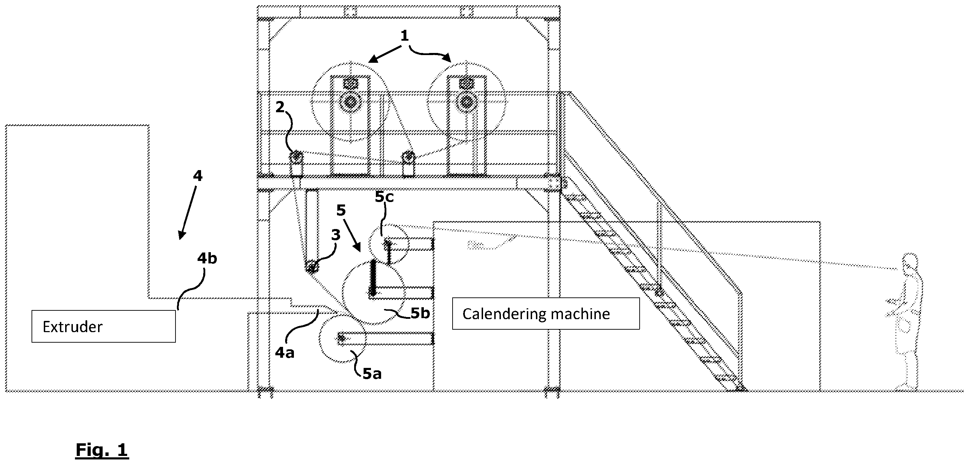

According to the embodiment illustrated in fig. 1, the decorated film is caused to progress towards an extrusion station, accurately avoiding that the decorated/metal finish side be contaminated or scratched during the path. For such purpose, a structure equipped with a tension-controlled support spindle 1, with rubber-coated transfer cylinders 2 and with at least one side-extending cylinder (banana roll or Mink) 3 is provided, up-stream of an extrusion unit 4, so as to ensure that the amorphous metal-finish film reaches extruder 4 and a lamination assembly 5 in a perfectly extended condition.

Compared to the representation of fig. 1, please notice that the decorated/metal-finish side of the base film faces left, that is, the side on which the extruder die is also arranged.

According to a variant of this embodiment, upstream (along the film path) of lamination assembly 5, a heat-adjustable pre-heating tunnel (not shown) is furthermore provided, with infrared light or other equivalent system, through which the first film is caused to pass. The pre-heating tunnel may be used for heat-adjusting the temperature of the first film before it comes in contact with the extruded material and the lamination cylinders, since that may affect the adhesion conditions of the composite laminate.

As mentioned above, the plant furthermore provides an extrusion/lamination station which consists of an extrusion head 4a, suitably supplied by an actual extruder 4b, and of a series of cylinders 5 - typically at least three cylinders, an entry cylinder 5a, a master cylinder 5b and an exit cylinder 5c - independently heat-adjusted on different temperature ranges, for example from 20 to 30°C entry cylinder 5a, from 30 to 42°C master cylinder 5b and from 45 to 55°C exit cylinder 5c. The heat-adjusted cylinders have the function, in addition to laminating the product at the desired thickness, also of progressively absorb heat, progressively cooling and stabilising the laminated product.

In the extrusion station a layer of clear (coloured or colourless) or partly dull (light barrier) plastic material, extruded in the molten state, for example PET, is deposited onto the first decorated/metal-finish film, on the side on which the decoration/metal finish is found.

The thickness of this second film of amorphous plastic material is in the order of 150-1.200µm, depending on the final desired thickness; the sum of the two ranges of thicknesses of the first and second film allows to reach thicknesses up to 2,000 µm, values which are out of reach with the bi-oriented/amorphous technology, since the bi-oriented film reaches at most thicknesses of 50 µm.

In particular, in the extrusion station, the veil of extruded plastic material is deposited on the decorated/metal finish side of the first film at a short distance upstream (in the progress direction of the film on the plant) of the nip between entry cylinder 5a and master cylinder 5b.

Preferably the first substrate film coupled with the molten plastic material come tangential on the line of closest proximity (nip) between entry cylinder 5a and master cylinder 5b.

For such purpose, preferably side-extending cylinder 3 is adjustably mounted in position, so as to be able to adjust the arrival angle of the first film at the extrusion head 4a and then at the entry of the gap between entry cylinder 5a and master cylinder 5b. The first film can furthermore pass on one side or on the opposite side of side-extending cylinder 3, so as to change the angle of the path thereof. In the embodiment illustrate in fig. 1 it can be noticed that stretching cylinder 3 is mounted vertically sliding at the lower end of support arms, which in turn can slide horizontally on the reference frame of the plant: the combination of the two horizontal and vertical movements supplies the desired adjustment displacement on the vertical plane.

In the embodiment illustrated in fig. 1, support spindles 1 are arranged advantageously in the upper part of the plant, therefore the first film comes from above and goes downwards before passing in the proximity of the extruder.

The extruder is located so as to convey the extruded material into the lower part of the first film, before the entry between entry cylinder 5a and master cylinder 5b.

On the extrusion head, in the extrusion die, adjustable side decklings are provided, which allow to adjust the width of the extrusion lip so as to produce a web of molten material of a with at least substantially equal to the one of the first substrate film, so that through a subsequent lateral trimming a coupled composite film may be obtained of the desired nominal dimensions.

In particular, it should be noted that an uneven thickness of the molten material occurs in the proximity of the lateral edges, which unevenness is further amplified by the presence of the first film entering the calenders which, with its own thickness, affect the extruding thin area. This portion of the material having irregular thickness would be unuseful.

Hence, preferably the side decklings of the extruder are arranged so that the second layer of extruded material has a greater width than that of the first film by at least 6-7 cm on each side, preferably between 6 cm and 10 cm depending on the thickness of the first metal-finish film.

These lateral bands of extruded material, which overhang beyond the lateral edges of the film have a twofold advantage. On the one hand, these lateral bands during the extrusion step absorb the fluctuations of molten material and avoid that irregularities propagate on the useful part of the coupled product; in actual fact it has been detected that the effect is excellent and the process reaches regime conditions in a very short time and with little wasted material. On the other hand, the lateral bands of even material (that is, the second molten material) allow to perform a trimming operation of 5-6 cm of the film externally to the metal-finish part, hence obtaining an easily recyclable waste and coupled material bobbins having perfectly even and flat edges.

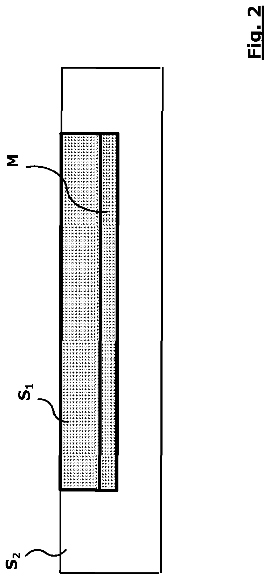

Finally, the lateral bands of the second material laterally constrain the thin layer of metal finish, determining an advantageous contribution to the consolidation of the various layers. The final product hence has a crosswise section as illustrated in fig. 2, wherein it is clearly perceived how the veil of metal finish M is embedded in the plastic material between the first layer of substrate S₁ and the second layer of molten material S₂. When the material is trimmed, a short portion of lateral band nevertheless remains which performs the same function. In the finished product of course the band of material without metal finish must not be present: for such purpose, after thermoforming, the edge of the product is trimmed again with hot blades, which engrave in the area wherein the coupled film also has the metal finish/decoration layer: in this step, the hot blades create a sort of local suture welding of the plastic material, which locally recreates a perimeter constraint between the two layers of plastic material having sandwiched therebetween the decoration/metal finish layer. The perimeter suture welding joined to the fact that the thermoformed material is consolidated by the same foldings of the finished product, virtually remove any risk of delamination of the coupled film.

Returning to the process mode, it must be noted that the second layer of extruded plastic material is advantageously laid on the first film at a temperature preferably in the range 230-280°C.

Thereby, a new layer of plastic material is obtained with amorphous structure on the previous first substrate (first substrate film), also having an amorphous structure.

This range of temperatures ensures the best coupling affinity between the two layers of amorphous plastic material, preferably PET, so as to avoid the forming of internal tensions or the embedding of air.

Immediately downstream of the extrusion station, the first decorated/metal-finish substrate film and the extruded layer laid thereon in the molten state are caused to pass into the assembly of heat adjusted laminating cylinders 5 which, in the path indicated in fig. 1, combine pressures and temperatures until they steadily couple the two layers and calibrate the thickness of the final film thereby obtained.

With the range of usable thicknesses the perfect coupling of the films in lamination requires precisely a passage through the path designed by the assembly of laminating cylinders 5.

For such purpose, preferably, the two coupled layers (first substrate film and extruded layer in the molten state), after having passed through the position where the entry cylinder 5a and the master cylinder 5b are tangential, continue the lamination path remaining adherent to the master cylinder for at least 180°, more preferably at least 200°, before passing into the position where master cylinder 5b and exit cylinder 5c are tangential. The coupled composite film remains adherent also to exit cylinder 5c for at least further 90° before definitively coming out of lamination/calendering assembly 5.

This path, wherein the composite film, after the extrusion passage, runs adherent to lamination cylinders 5, ensures a correct calibration of the final product and, especially, a progressive cooling which determines a perfect adhesion of the two layers, without producing anomalous deformations of the decoration/metal-finish and excessive risks of delamination between the two layers.

As a result, upon the increase of the thicknesses, the lamination speed must be reduced, to allow correct cooling and a stable adhesion between the two films. Typically, the range of film progress speeds lies between 20 m/min (high thicknesses) and 60 m/min (lower thicknesses).

At the end of the lamination/calendering step, an even coupled composite film is obtained, consisting of two plastic layers, both with an amorphous structure, between which the decoration/metal-finish veil (visible at least through the clear layer/s) is embedded. The colour of the layers of plastic film determines the type of metal effect obtained, starting from transparent (silver), passing from various hues of grey (from platinum to lead), as far as amber which covers the range of copper to all the varieties of gold (yellow, pink, red). In order to obtain the same colour result from both surfaces it is necessary that the colour effect of the two layers of plastic film is the same regardless of the thickness thereof.

Decorative variants, alternative to the metal finish are obtained with a first substrate film - always strictly amorphous and better if made of PET - decorated as marble, wood, with advertising or of a different nature images.

The perfect affinity between the two amorphous layers, joined and intimately consolidated by the high-temperature coupling followed by lamination, ensures a fully neutral behaviour and devoid of tensioning. The shrinkage rates typical of the two layers are fully equivalent, which property makes the composite film devoid of any drawback in the subsequent thermal treatments.

Unlike the previous technology, which had stretching difficulties due to the "resistance" opposed by the bi-oriented layer, in the present case of the invention the material faithfully follows the details of the moulds.

Hence, once cooled, the coupled composite film can be used as is or cut to measure of a blank and undergo a thermoforming process in a mould, producing a desired final product, such as a serving tray. Precisely because the material of the invention is capable of accurately following the mould details, to obtain a quality finished product, it is suitable that the moulds are finished smooth, that is with an even or in any case low roughness value, using then 0.3-0.5-millimetre holes for air extraction.

By this process it is possible to mould a tray of any perimeter shape and especially with any surface shape, because the coupled semi-finished product of two amorphous layers endures very well even high deformations, without risks of cracks or delaminations. The absence of anomalous flows of the material during thermoforming leaves also fully unimpaired the evenness and uniformity of the metal-finish layer, which is hence of better quality and appearance, even though undergoing high stretching rates or high moulding temperatures. The best results are obtained with forming systems combined with the aid of compressed air in a range from 3 to 5 bar, and the use of sandwich-like heating ovens with differentiated temperatures, hotter on the greater thickness and less hot on the thinner one.

Better results are obtained thermoforming the composite film in a condition in which the thinner layer is on the part at sight.

At the end of the thermoforming, in a way known per se, the final product (for example a food serving tray) is laterally trimmed to remove thermoforming trimmings and swarfs by shearing systems or punching systems, preferably with cutting blades heated at about 140-150°C. The final hot-blade trimming perfectly cauterizes/welds the perimeter edge of the product, stabilising it.

Once cooled, since the shrinkages of the two layers are identical and no tensions remain due to elastic form "memory", the final product maintains the desired shape - as it is imparted by the thermoforming - and remains perfectly stable in time.

Due to a construction structure which comprises two layers of amorphous plastic material, with the thin layer of metal finish or decoration arranged in between, the product thermoformed according to the invention perfectly achieves the desired results.

It is nevertheless understood that the invention must not be considered limited to the particular arrangements illustrated above, which make up exemplifying embodiments, but that different variants are possible, all within the reach of a person skilled in the field, without departing from the scope of protection of the invention, as defined by the following claims.

For example, although the preferred manufacturing plant provides that the substrate film is unwound from top to bottom, it is not ruled out in line of principle that the substrate film may come also from the bottom to the extruder. For example, the film coming from the bottom could wound on the entry cylinder and the melt material would fall above the film on its decorated/metalized surface.

This solution evidently implies plant and accessibility discomfort, but it is not ruled out that the coupling with the extruded material may occur in an equally effective manner or that this solution could be advantageous due to other plant requirements. Similarly, the same extruder could be arranged to transfer the molten material according to a vertical plane instead of on a substantially horizontal plane.

## Claims

1. Manufacturing process of a composite film for thermoformed products, comprising the steps of
manufacturing a first plastic substrate film (S₁) in amorphous state , by extrusion,
causing said first plastic substrate film (S₁) to undergo a decoration/metal-finish process (M),
causing said first plastic substrate film (S₁) to undergo a lamination step, **characterised in that**
before said lamination step, on said first substrate film (S₁) in amorphous state a layer of molten plastic material (S₂) is laid, coming out of an extrusion head (4a), and **in that**
said first plastic substrate film (S₁) coupled with the layer of molten plastic material (S₂), immediately downstream of said extrusion head (4a) pass between an entry cylinder (5a) and a master cylinder (5b) of a lamination unit (5) furthermore comprising at least an exit cylinder (5c),
the thickness of said first plastic substrate film (S₁) being in the range of 150-800µm and the thickness of said layer of molten plastic material (S₂) being in the range of 150-1200-µm after lamination,
said entry cylinder (5a), master cylinder (5b) and exit cylinder (5c) being heat adjusted on temperatures in the range 20-55°C, with growing temperatures from the entry cylinder (5a), to the master cylinder (5b) to the exit cylinder (5c).

2. Process as in claim 1, wherein said cylinders (5) are independently heat adjusted, the entry cylinder (5a) from 20° to 30°C, the master cylinder (5b) from 30° to 42°C and the exit cylinder (5c) from 45° to 55°C.

3. Process as in claim 1 or 2, wherein said extruded molten film layer (S₂) is laid on said first substrate film (S₁) on the side on which the decoration/metal-finish (M) is found.

4. Process as in any one of the preceding claims, wherein said fist plastic film coupled with the layer of molten plastic material arrive tangential in the nip area between said entry cylinder (5a) and said master cylinder (5b).

5. Process as in any one of the preceding claims, wherein upstream of said extrusion head (4a), said first substrate film (S₁) passes on one or more rubber-coated transfer cylinders and at least one side-extending cylinder (3).

6. Process as in any one of the preceding claims, wherein said first film (S₁) comes from the top and descends to the bottom before passing in the proximity of the extruder head (4a) which is arranged so as to convey said molten plastic material (S₂) in the lower part of said first film, before the nip area between said entry cylinder (5a) and master cylinder (5b).

7. Process as in any one of the preceding claims, wherein said layer of molten plastic material (S₂) is laid at a temperature ranging from 230° to 280°C.

8. Process as in any one of the preceding claims, wherein said first substrate film and said extruded molten plastic material are PET-based.

9. Process as in any one of the preceding claims, wherein said layer of molten plastic material (S₂) coming out of the extrusion head (4a) is laid having on a width greater than the width of said first substrate film (S₁), forming lateral bands which laterally extend beyond said first substrate film (S₁) by at least 6 cm.

10. Composite plastic film for the production of thermoformed products, as obtained in any one of the preceding claims and consisting of a first substrate plastic film in the amorphous state, with a completely decorated/metalised surface whereon a layer of amorphous extruded plastic material is coupled,
the thickness of said first substrate film being in the range of 150-800µm and the thickness of said layer of said amorphous extruded plastic material being in the range of 150-1200µm.

11. Thermoformed product made with a decorated/metalised composite plastic film as in claim 10, wherein, the perimeter trimming of the thermoformed product is obtained by a hot blade apt to weld said first plastic substrate film (S₁) with said second layer of plastic material (S₂) internally constraining said metal-finishing/decoration.

12. Thin thermoformed product as in claim 11, wherein at least said first substrate is made of PET.

13. Thin thermoformed product as in claim 11 or 12, which is a food serving tray.

## Patentansprüche

1. Herstellungsverfahren eines Verbundfilms für Thermoformprodukte, umfassend die Schritte:
Herstellen eines ersten Kunststoffsubstratfilms (S₁) in amorphem Zustand, durch Extrusion,
Bewirken, dass der erste Kunststoffsubstratfilm (S₁) einem Dekorations-/Metall-Endbearbeitungsverfahren (M) unterliegt,
Bewirken, dass der erste Kunststoffsubstratfilm (S₁) einem Laminierungsschritt unterliegt, **dadurch gekennzeichnet, dass**
vor dem Laminierungsschritt, eine Schicht aus geschmolzenem Kunststoffmaterial (S2) auf den ersten Substratfilm (S₁) in amorphem Zustand gelegt wird, kommend aus einem Extrusionskopf (4a), und dass
der erste Kunststoffsubstratfilm (S₁), gekoppelt mit der Schicht aus geschmolzenem Kunststoffmaterial (S2), unmittelbar stromabwärts des Extrusionskopfes (4a) zwischen einem Eintrittszylinder (5a) und einem Masterzylinder (5b) einer Laminierungseinheit (5) vorbeiführt, die ferner wenigstens einen Austrittszylinder (5c) umfasst,
wobei die Dicke des ersten Kunststoffsubstratfilms (S₁) in dem Bereich von 150-800 µm ist und die Dicke der Schicht aus geschmolzenem Kunststoffmaterial (S2) im Bereich von 150 bis 1200 µm nach der Laminierung ist,
wobei der Eintrittszylinder (5a), der Masterzylinder (5b) und der Austrittszylinder (5c) wärmeeingestellt sind auf Temperaturen im Bereich von 20-55°C, mit steigenden Temperaturen vom Eintrittszylinder (5a) zum Masterzylinder (5b) zum Austrittszylinder (5c).

2. Verfahren nach Anspruch 1, wobei die Zylinder (5) unabhängig wärmeeingestellt sind, der Eintrittszylinder (5a) von 20°C bis 30°C, der Masterzylinder (5b) von 30°C bis 42°C und der Austrittszylinder (5c) von 45°C bis 55°C.

3. Verfahren nach Anspruch 1 oder 2, wobei die extrudierte geschmolzene Filmschicht (S2) auf den ersten Substratfilm (S1) auf der Seite gelegt wird, auf der die Dekorations-/Metall-Endbearbeitung (M) gefunden wird.

4. Verfahren nach einem der vorangehenden Ansprüche, wobei der erste Kunststofffilm, gekoppelt mit der Schicht aus geschmolzenem Kunststoffmaterial, tangential in dem Spaltenbereich zwischen dem Eintrittszylinder (5a) und dem Masterzylinder (5b) ankommt.

5. Verfahren nach einem der vorangehenden Ansprüche, wobei stromaufwärts des Extrusionskopfs (4a) der erste Substratfilm (S1) auf einen oder mehrere Gummi-beschichtete Transferzylinder und wenigstens einen Seitenerstreckenden Zylinder (3) gelangt.

6. Verfahren nach einem der vorangehenden Ansprüche, wobei der erste Film (S1) von oben kommt und nach unten herunterläuft, bevor er in die Nähe des Extrusionskopfs (4a) gelangt, der angeordnet ist, um das geschmolzene Kunststoffmaterial (S2) in den unteren Teil des ersten Films zu fördern, vor dem Spaltenbereich zwischen dem Eintrittszylinder (5a) und dem Masterzylinder (5b).

7. Verfahren nach einem der vorangehenden Ansprüche, wobei die Schicht aus geschmolzenem Kunststoffmaterial (S2) bei einer Temperatur im Bereich von 230°C bis 280°C gelegt wird.

8. Verfahren nach einem der vorangehenden Ansprüche, wobei der erste Substratfilm und das extrudierte geschmolzene Kunststoffmaterial auf Basis von PET sind.

9. Verfahren nach einem der vorangehenden Ansprüche, wobei die Schicht aus geschmolzenem Kunststoffmaterial (S2), die aus dem Extrusionskopf (4a) kommt, gelegt wird mit einer Breite, die größer ist als die Breite des ersten Substratfilms (S1), ausbildend seitliche Banden, die sich seitlich über den ersten Substratfilm (S1) um wenigstens 6 cm erstecken.

10. Verbundkunststofffilm für die Herstellung von Thermoformprodukten, erhältlich nach einem der vorangehenden Ansprüche und bestehend aus einem ersten Substratkunststofffilm in amorphem Zustand, mit einer vollständig dekorierten, metallisierten Oberfläche, auf der eine Schicht aus amorphem extrudiertem Kunststoffmaterial gekoppelt ist,
wobei die Dicke des ersten Substratfilms im Bereich von 150-800 µm ist und die Dicke der Schicht des amorphen extrudierten Kunststoffmaterials im Bereich von 150-1200 µm ist.

11. Thermoformprodukt, hergestellt mit einem dekorierten/metallisierten Verbundkunststofffilm nach Anspruch 10, wobei das Umfangstrimmen des Thermoformprodukts erhalten wird durch eine Heißklinge, die geeignet ist, um den ersten Kunststoffsubstratfilm (S1) mit der zweiten Schicht aus Kunststoffmaterial (S2), innerlich einschränkend die Metall-Endbearbeitung/Dekoration, zu verschweißen.

12. Dünnes Thermoformprodukt nach Anspruch 11, wobei wenigstens das erste Substrat aus PET hergestellt ist.

13. Dünnes Thermoformprodukt nach Anspruch 11 oder 12, welches ein Lebensmittelserviertablett ist.

## Revendications

1. Procédé de fabrication d'un film composite pour produits thermoformés, comprenant les étapes suivantes :
fabriquer un premier film plastique formant substrat (S₁) dans un état amorphe, par extrusion,
soumettre ledit premier film plastique formant substrat (S₁) à un procédé de décoration/finition métal (M),
soumettre le premier film plastique formant substrat (S1) à une étape de laminage, **caractérisé en ce que**
avant ladite étape de laminage, une couche de matière plastique fondue (S₂) provenant d'une tête d'extrusion (4a) est étendue sur ledit premier film formant substrat (S₁), et **en ce que**
ledit premier film plastique formant substrat (S₁) couplé à la couche de matière plastique fondue (S₂), immédiatement en aval de la tête d'extrusion, passent entre un cylindre d'entrée (5a) et un cylindre maître (5b) d'une unité de laminage (5) comprenant en outre un cylindre de sortie (5c),
l'épaisseur dudit premier film plastique formant substrat (S₁) étant dans la gamme de 150 et 800 µm et l'épaisseur de ladite couche de manière plastique fondue (S₂) étant dans la gamme de 150 à 1200 µm après laminage,
lesdits cylindre d'entrée (5a), cylindre maître (5b) et cylindre de sortie (5c) étant ajustés en température à des températures dans la gamme de 20 à 55 °C, avec des températures croissantes du cylindre d'entrée (5a) au cylindre maître (5b) au cylindre de sortie (5c).

2. Procédé selon la revendication 1, dans lequel les cylindres sont ajustés en température indépendamment, le cylindre d'entrée (5a) entre 20 et 30 °C, le cylindre maître (5b) entre 30 et 42 °C et le cylindre de sortie (5c) entre 45 et 55 °C.

3. Procédé selon la revendication 1 ou 2, dans lequel ladite couche de film extrudé fondue (S₂) est étendue sur le premier film formant substrat (S₁) du côté sur lequel se trouve la décoration/la finition métal (M).

4. Procédé selon l'une quelconque des revendications précédentes, dans lequel le premier film plastique couplé à la couche de matière plastique fondue arrive tangentiellement à la zone de pincement entre ledit cylindre d'entrée (5a) et ledit cylindre maître (5b).

5. Procédé selon l'une quelconque des revendications précédentes, dans lequel en amont de ladite tête d'extrusion (4a), ledit premier film formant substrat (S₁) passe sur un ou plusieurs cylindres de transfert revêtus de caoutchouc et au moins un cylindre s'étendant de côté (3).

6. Procédé selon l'une quelconque des revendications précédentes, dans lequel ledit premier film (S₁) provient du haut et descend vers le bas avant de passer au voisinage de la tête d'extrusion (4a) qui est disposée de manière à transporter ladite matière plastique fondue (S₂) dans la partie basse dudit premier film, avant la zone de pincement entre ledit cylindre d'entrée (5a) et ledit cylindre maître (5b) .

7. Procédé selon l'une quelconque des revendications précédentes, dans lequel ladite couche de matière plastique fondue (S₂) est étendue à une température comprise entre 230 et 280 °C.

8. Procédé selon l'une quelconque des revendications précédentes, dans lequel ledit premier film formant substrat et ladite matière plastique fondue extrudée sont à base de PET.

9. Procédé selon l'une quelconque des revendications précédentes, dans lequel ladite couche de matière plastique fondue (S₂) sortant de la tête d'extrusion (4a) est étendue en ayant une largeur plus grande que la largeur dudit premier film formant substrat (S₁), en formant des bandes latérales qui débordent latéralement au-delà dudit premier film formant substrat (S₁) d'au moins 6 cm.

10. Film plastique composite pour la fabrication de produits thermoformés, tel qu'obtenu selon l'une quelconque des revendications précédentes et consistant en un premier film plastique formant substrat à l'état amorphe, avec pardessus une surface entièrement décorée/métallisée sur laquelle une matière plastique extrudée amorphe est adjointe,
l'épaisseur dudit premier film formant substrat étant dans la gamme de 150 à 800 µm et l'épaisseur de ladite couche de matière plastique extrudée amorphe étant dans la gamme de 150 à 1200 µm.

11. Produit thermoformé réalisé avec un film plastique composite décoré/métallisé selon la revendication 10, dans lequel l'ajustement périmétrique du produit thermoformé est obtenu par une lame chaude apte à souder ledit premier film plastique formant substrat (S₁) à ladite seconde couche de matière plastique (S₂) en contraignant de façon interne ladite finition métal/décoration.

12. Produit thermoformé mince selon la revendication 11, dans lequel au moins ledit premier substrat est constitué de PET.

13. Produit thermoformé mince selon la revendication 11 ou 12, constituant un plateau de service alimentaire.
